# EUROPEAN PATENT APPLICATION

(11) **EP 3 333 394 A1**
(43) Date of publication of application: **13.06.2018**
(21) Application number: 16002618.3
(22) Date of filing: 08.12.2016
(51) Int. Cl.: F02D 41/00, F02D 41/32, G01M 15/11, G01M 15/10, G01M 15/12, F02D 41/30, F02P 9/00, F02P 5/15, F02D 35/02, F02D 41/14, F02D 41/28, F02D 19/06

(54) **SPARK IGNITION COMBUSTION ENGINE CONTROL**

(71) Applicant: Makita Corporation, Anjo-shi Aichi 446-8502 (JP)
(72) Inventor: Eichler, Enrico, 22089 Hamburg (DE); Frejno, Rafael, 21033 Hamburg (DE); Geist, Johannes, 22589 Hamburg (DE); Kellermann, Christian, 22946 Grande (DE)
(74) Representative: Müller-Boré & Partner Patentanwälte PartG mbB

(57) **Abstract**

A control device (24) for a combustion engine (1) of a working tool is provided, comprising: a first input for information of a combustion of one cycle of a combustion chamber (4) of the engine; and a first output for controlling a component (14) of the engine, wherein the control device (24) is configured to determine the first output based on the first input of one cycle of the combustion chamber (4) and the first input of a preceding cycle of the combustion chamber (4).

## Description

The present invention relates to a control device for a combustion engine, a method for controlling a combustion engine, and a computer program product.

A combustion engine can be controlled by a control device in order to obtain a desired operation of the engine under different ambient conditions, such as ambient temperature, ambient pressure, ambient humidity, or other engine conditions such as a clogged air filter or the use of different fuels. Typically, ambient conditions and/or conditions of the engine are identified, and at least a factor of the engine is adjusted in order to obtain a desired operation of the engine.

Recently, even in combustion engines for working tools, such as chainsaws, cutting-off wheel devices or the like, engine controls have been increasingly implemented. Particularly for combustion engines for working tools, it is desirable to realize the engine control reliably at low costs and without many additional components.

Accordingly, it is an object of the present invention to provide a control device for a combustion engine, a respective method and computer program product, which enables a reliable control of the engine in a simple, cost effective manner.

The above object is solved by the subject-matter of the independent claims. Preferred embodiments are defined in the dependent claims.

According to the present invention, a control device for a combustion engine of a working tool is provided, comprising: a first input for information of a combustion of one cycle of a combustion chamber of the engine, and a first output for controlling a component of the engine, wherein the control device is configured to determine the first output based on the first input of one cycle of the combustion chamber and the first input of a preceding cycle of the combustion chamber.

Advantageously, the control device for a combustion engine of a working tool of the present invention can control the combustion engine based on information of a combustion provided at a first input at one cycle and the preceding cycle of a combustion chamber of the engine, wherein the information of a combustion provided at following cycles of the combustion chamber may indicate changes of the information of a combustion. In particular, the occurrence of a change of the information of a combustion between following cycles of a combustion chamber allows conclusions regarding the operating conditions of the combustion engine and enables the control device to control the combustion engine accordingly in a fast and reliable manner. Furthermore, the layout of the control device can be designed with common, cost efficient control device hardware and simple configuration of the control device.

The operation of a control device includes the input of information, optionally the storage of the information, the processing of the information based on predetermined processing steps and the output of a processing result. The general meaning of input is to provide or give information to the control device, in other words the state/act of a control device or component of a control device accepting information from the user, from a peripheral device or from a piece of software either automatically or manually. The output of the control device provides the processing result to a user, a peripheral device or to a piece of software. Preferably, the input of information is based on an electrical signal representing the information, wherein the electrical signal is provided to an electrical input terminal of the control device. In an analog manner, the output of the processing result is based on an electrical signal representing the processing result and is provided at an electrical output terminal of the control device.

The basic requirements for type and design of the control device for a combustion engine may therefore include a processor core, memory, and programmable input/output peripherals. Preferably also program memory as typically used in embedded systems may be available.

The type and design of the combustion engine to be controlled is also not limited. The combustion engine can be a four-stroke engine, a two-stroke engine or a Wankel engine. Also, the configuration of the cylinder defining the combustion chamber and the number thereof is not limited. The combustion engine can be a combustion engine for a working tool, such as a chainsaw, a cutting-off wheel device, a brush cutter, a lawn mower or the like. However, the combustion engine can also be an outboard engine, a scooter engine, a motorcycle engine, an engine for a small passenger car, an engine for a ultra-light aircraft or the like.

The control device for a combustion engine can be mounted to the combustion engine. One cycle of the combustion engine with respect to one combustion chamber includes intake, compression, expansion and exhaust. In a two-stroke engine, one cycle corresponds to 360° rotation of the crankshaft, and in a four-stroke engine, one cycle corresponds to 720° rotation of the crankshaft.

The first input peripheral of the control device may be configured to receive information of a combustion of one cycle of a combustion chamber of the engine. The information received at the first input of the control device may contain qualitative or quantitative information of the combustion which may provide conclusions about the operating conditions of a combustion chamber of the engine, when evaluating the first inputs of two following cycles.

Qualitative information may provide information with respect to a state of the complete combustion chamber or single parts of the combustion chamber. The qualitative information often can be represented by a binary information, for example an exhaust gas is hot or cold, exhaust valves are closed or open etc. Quantitative information on the other hand may provide information with respect to a certain quantitative value of a parameter, wherein the parameter preferably is represented by a measurable physical unit. The quantitative information may be represented by an analog or discrete value. The qualitative information and the quantitative information may be provided continuously or for discrete time points in a certain time period. A quantitative value for a certain discrete time point may be calculated for example by a mean value or a median value of a certain time period.

The acquisition of the qualitative or quantitative information may be performed by any kind of a sensor unit, which may transform and scale the qualitative or quantitative information to a sensor signal. The sensor signal may be suitable for the first input to the control device and for further processing within the control device. Preferably, the sensor signal is based on an electrical signal, which can be used as the first input for the control device.

The time period for acquisition of the qualitative or quantitative information can be related to one cycle of a combustion chamber, wherein the qualitative or quantitative information may be acquired during the whole cycle of a combustion chamber or at one or more dedicated points in the cycle of a combustion chamber. For example, the qualitative or quantitative information may be provided for a predetermined rotation angle section or predetermined rotation angle of the crankshaft representing a certain state of the combustion chamber during a cycle of the combustion chamber.

The control device may be configured to continuously receive the information of a combustion at a first input and to store the information of a certain cycle of a combustion chamber and the information of the following cycles of a combustion chamber. Preferably, the information of a combustion for every cycle is stored with respect to the same time section or time point in a cycle of a combustion chamber, in order to provide information of a combustion that is comparable over several cycles of a combustion chamber.

The component of the combustion engine to be controlled by an output of the control device is not limited. For example, the component to be controlled can be responsible for the adjustment of the air-fuel ratio of the air-fuel mixture, the opening and/or closing timings of the intake and/or exhaust valves, the charging pressure of the intake air, the amount of exhaust gas recirculation (EGR), the cooling amount of the combustion engine etc.

Preferably the information provided to the first input is information regarding the temperature and/or pressure of an exhaust gas of the respective cycle of the combustion chamber.

Detecting the temperature and/or pressure of an exhaust gas of a cycle of the combustion chamber allows drawing conclusions about the combustion of said cycle of the combustion chamber, and enables to particularly reliably identify whether a combustion has taken place in the combustion chamber in said cycle or not. The control device is preferably configured to detect whether a no-spark combustion, i.e. a self ignition combustion, has occurred in the combustion chamber or not. Furthermore, detecting a change of the information provided to the first input of the control device for two following cycles may allow conclusions regarding the operation conditions of the combustion engine. Advantageously, the control device for the combustion engine is capable of carrying out a change determining step for detecting such a change of the information. The change determining step can be performed by the control device within a change determining cycle of the combustion chamber in various ways.

One possibility to detect the occurrence of a combustion in one cycle is to detect a state of the exhaust gas. In particular, it is possible to detect the state of the exhaust gas of a first cycle of the combustion chamber and to detect a state of the exhaust gas of a following second cycle of the combustion chamber, preferably directly following said first cycle, and to compare the detection results. In such a case, the change determining step may be carried out in the second cycle of the combustion chamber, which means that the second cycle would be the change determining cycle. The state of the exhaust gas to be detected can be the exhaust gas temperature and/or the exhaust gas pressure and/or the exhaust gas composition.

When a combustion does not occur in the following second cycle, the exhaust gas temperature and the exhaust gas pressure will drop, provided that a combustion has taken place in the preceding first cycle. On the other hand, when a combustion occurs in the following second cycle, the exhaust gas temperature and the exhaust gas pressure will rise or be substantially equal to that of the preceding first cycle, provided that a combustion has taken place in the preceding cycle. Detecting the exhaust gas composition, particularly the presence and/or amount of certain substances, also enables to determine whether or not a combustion has occurred in the change determining cycle in which the combustion detection step is carried out.

Preferably, the information provided to the first input is information regarding the ionization of an air-fuel mixture in the combustion chamber of the combustion engine of the respective cycle of the combustion chamber.

Another possibility to detect the occurrence of a combustion in one cycle is to detect a state of the burning or not burning air-fuel mixture in the combustion chamber. In particular, it is possible to detect the state of the burning or not burning air-fuel mixture in the combustion chamber of a first cycle of the combustion chamber and to detect a state of the burning or not burning air-fuel mixture in the combustion chamber of a following second cycle of the combustion chamber, preferably directly following said first cycle, and to compare the detection results. The state of the burning or not burning air-fuel mixture to be detected can be the ionization of the burned or not burned air-fuel mixture. By measuring the ionization of the burning or not burning air-fuel mixture in the combustion chamber, the occurrence of a combustion in the combustion chamber can be reliably detected, since a flame conducts ions significantly better than a not burning air-fuel mixture. When a combustion does not occur in the following second cycle, the ionization of the not burning air-fuel mixture will drop. On the other hand, when a combustion occurs in the following second cycle, the ionization of the burning air-fuel mixture will rise or be substantially equal to that of the preceding first cycle. However, it is also possible to detect a combustion in the a cycle, when the ionization, i.e. the current flowing through an ionic current sensor, abruptly rises during the cycle.

Preferably, the information provided to the first input is information regarding temperature and/or vibrations/accelerations in the proximity of the combustion chamber of the combustion engine of the respective cycle of the combustion chamber.

Another possibility to detect the occurrence of a combustion in one cycle is to detect a state of the combustion engine other than the exhaust gas. In particular, it is possible to detect a state of the combustion engine of a first cycle of the combustion chamber and to detect a state of the combustion engine of a following second cycle of the combustion chamber, preferably directly following said cycle, and to compare the detection results. The state of the combustion engine to be detected can be the temperature and/or vibrations/accelerations in the proximity of the combustion chamber, e.g. at the cylinder wall, and/or the rotational speed of the crank shaft of the combustion engine. When a combustion does not occur in the following second cycle, which may be the change determining cycle, the temperature and the intensity of the vibrations/accelerations in the proximity of the combustion chamber and the rotational speed of the crank shaft of the combustion engine will drop, provided that a combustion has taken place in the preceding first cycle. On the other hand, when a combustion occurs in the following second cycle, the temperature and the intensity of the vibrations/accelerations in the proximity of the combustion chamber and the rotational speed of the crank shaft of the combustion engine will rise or be substantially equal to that of the preceding first cycle, provided that a combustion has taken place in the preceding cycle. In view of a fast detection speed, it is preferred to detect the occurrence of a combustion by detecting a state of the combustion engine other than the rotation speed of the crank shaft.

The change determining step carried out in the change determining cycle can, thus, be a combustion detection step. The above described means and methods for detecting the occurrence of a combustion by the change determining step in the change determining cycle can be combined for more accurate results and/or to obtain redundancy.

Advantageously, by comparing a state of the exhaust gas and/or the combustion engine in a first cycle and in a following second cycle, the occurrence of a combustion can be simply and reliably detected. In particular, it is not necessary to precisely detect absolute values of the states, since only the relative change of the states are considered.

Preferably, the control device is configured to store a first first quantitative value of the first input of one cycle of the combustion chamber and to compare the first first quantitative value with a second first quantitative value of the first input of a following cycle of the combustion chamber.

The information of a combustion provided to the first input of the control device can be a quantitative value, wherein the quantitative value may contain information which is suitable for the processing in a 4-bit, a 8-bit, a 16-bit or a 32-bit control device processor or the like. The quantitative value may contain a more detailed differentiation of the information of a combustion than for a qualitative information.

The quantitative value of a combustion received at the first input of the control device may be provided continuously for every cycle of the combustion chamber and at least two quantitative values for one cycle and a following cycle, i.e. a first first quantitative value and a second first quantitative value, respectively, may be stored in the control device memory. Preferably, the at least two quantitative values stored are values of two cycles of the combustion chamber directly following each other, but may also be values of two cycles of the combustion with one or more unmeasured cycles in between.

The first first quantitative value and second first quantitative value may be compared by the control device processor in a processing operation, wherein the processing operation may realize a relational operator that tests or defines the relation of the two quantitative values. This relational operator may include numerical equality and inequalities and may be used in switching statements to dispatch the control flow for controlling a component of the engine in order to perform a desired control action.

Preferably, the control device is configured to determine a change of the first quantitative value, if the difference of the first first quantitative value and the second first quantitative value exceeds a predetermined threshold value and/or the control device is configured to determine no change of the first quantitative value, if the difference of the first first quantitative value and the second first quantitative value does not exceed a predetermined threshold value.

As a result of the comparison of the first first quantitative value and second first quantitative value, the processing operation of the control device processor may determine whether the two quantitative values are considered equal or unequal. Preferably, the comparison of the two quantitative values is performed by first calculating the difference of first first quantitative value and second first quantitative value and then comparing whether the result exceeds a predetermined threshold value or not. It is also possible to further classify a detected change based on the algebraic sign of the change.

In order to predetermine the threshold value, the quantitative value of the first input may be empirically measured and analyzed in advance for different operation conditions for the combustion of one cycle of a combustion chamber of the engine. For example, the quantitative value of the first input can be measured for a state wherein a combustion occurs within the respective cycle of the combustion chamber and for a state wherein no combustion occurs within the respective cycle of the combustion chamber. The respective empirical measurements may be performed under constant ambient conditions for the combustion engine. The threshold value then may be predetermined by choosing a value which reliably classifies the empirically measured quantitative values in a state wherein a combustion occurs within the respective cycle of the combustion chamber and in a state wherein no combustion occurs within the respective cycle of the combustion chamber.

The difference of the first first quantitative value and second first quantitative value, as well as the threshold value may be calculated as a numerical value with negative or positive algebraic sign or as an absolute numerical value exclusively represented by positive numbers. Preferably, the difference and the threshold value are not calculated as absolute numerical values, in order to remain information whether a change of the first first quantitative value at the first input is directed to a negative or positive numerical value.

The substeps including the storage of the second first quantitative value, the comparison of the first first quantitative value and second first quantitative value and the determination whether the first first quantitative value has changed may be summarized as the change determining step performed by the control device in a change determining cycle. A detected change in the change determining step therefore may indicate whether the combustion in the combustion chamber of the engine has changed between the cycles.

Preferably, a component of the combustion engine controlled by the first output is configured to be adjusted for the following cycles of the combustion chamber, and the adjustment is performed differently depending on whether the control device has determined a change of the first first qualitative value or not.

The adjustment of the component of the combustion engine may be initiated by the control device after the change determining step has been performed. The control device may then provide an output signal at the first output representative for the adjustment to be performed at the component of the combustion engine. The first output may remain unchanged, e.g with a constant output signal, until the next change determining step has been performed. The frequency of selectively carrying out the change determining step can be chosen according to the need and the component of the combustion engine to be adjusted. For example, a change determining cycle including a change determining step can be carried out every 100 cycles or every 10 cycles for continued adjustment of the component of the combustion engine.

If the control device has determined no change of the first quantitative value at the first input in the change determining step, the control device may remain the output signal at the first output unchanged with respect to the output signal before the change determining step. Another implementation option for the control device may be, that the control device provides an output signal at the first output, which adjusts the component of the combustion engine so that the control device more likely will determine a change of the first quantitative value at the first input in the next change determining step. The amount of adjustment initiated by the output signal may be dependent on the difference of the first first quantitative value and second first quantitative value calculated in the change determining step. For example, the amount of adjustment may be more significant for a negative numerical difference and less significant for a positive numerical difference smaller than the threshold value.

On the other hand, if the control device has determined a change of the first quantitative value at the first input in the change determining step, the control device may provide an output signal at the first output which adjusts the component of the combustion engine so that the control device less likely will determine a change of the first quantitative value at the first input in the next change determining step. The amount of adjustment initiated by the output signal may be also be dependent on the difference of the first first quantitative value and second first quantitative value calculated in the change determining step. For example, the amount of adjustment may be more significant for a positive numerical difference the more the difference exceeds the threshold value.

Preferably, the first first quantitative value and the second first quantitative value of the first input are configured to be respectively measured in a same predetermined crankshaft angle section of a cycle of the combustion chamber.

Cycles of the combustion chamber wherein the control device is not performing a change determining step, may be considered as normal operating cycles. Diagrams illustrating the continuous measurement of the quantitative values of the first input at the y-axis with respect to the crankshaft angle at the x-axis for one cycle may provide similar results for all normal operating cycles and constant ambient and operating conditions. Therefore, measurements of the quantitative values of the first input in the same predetermined crankshaft angle sections may provide results with minor measurement deviations for all cycles. Therefore, measurements for the same predetermined crankshaft angle may be regarded as predictable and suitable for a comparison.

Advantageously, measurements of the quantitative values of the first input in the same predetermined crankshaft angle section, particularly at the same predetermined crankshaft angle, for cycles during a change determining step may provide results which significantly deviate when operating conditions and/or ambient conditions change. Therefore, changes for the measurements of the first first quantitative value and the second first quantitative value of the first input in the same predetermined crankshaft angle section may be reliably detected.

Preferably, said predetermined crankshaft angle section corresponds to a crankshaft angle section in which no spark is generated in the combustion engine.

The measurement deviation of the quantitative value of the first input with respect to crankshaft angles corresponding to a spark generation in the combustion engine may be more significant than for crankshaft angles not related to a spark generation. This is related to electromagnetic disturbances caused by the spark generation, which may influence the acquisition of the sensor signal provided at the first input and also the processing, or to other disturbing influences in the combustion chamber. Measurements of the quantitative value of the first input performed for a crankshaft angles not related to a spark generation are therefore more reliable and easier to compare.

Preferably, the first first quantitative value and the second first quantitative value of the first input are configured to be respectively derived from a plurality of measurements within the predetermined crankshaft angle section, particularly as a mean value of said plurality of measurements.

Runaway values in the plurality of measurements within the predetermined crankshaft angle section may be filtered out before deriving the first quantitative value therefrom. From said measurements, the first quantitative value can be derived by, e.g., calculating the mean value or the maximum value therefrom. For example, 3 to 10 measurements can be carried out at equal intervals within the predetermined crankshaft angle section. However, it is also possible to carry out only one measurement at a predetermined crankshaft angle within the predetermined crankshaft angle section.

Preferably, the first output controls an air-fuel ratio of an air-fuel mixture of the engine.

Advantageously, by adjusting the air-fuel ratio of the air-fuel mixture, a factor of the combustion engine having a strong influence on the performance of the combustion engine is controlled. In particular, by adjusting the air-fuel ratio of the air-fuel mixture, a desired operation of the combustion engine under different ambient conditions, such as ambient temperature, ambient pressure, ambient humidity, or other engine conditions such as a clogged air filter or the use of different fuels, can be reliably obtained.

The air-fuel ratio can be adjusted by adjusting the fuel supply amount and/or by adjusting the air supply amount. The fuel supply amount can be adjusted by fuel supply means which can be connected to the first output of the control device. In particular, the fuel supply amount can be adjusted by means of electronic carburetors having a solenoid valve or an Electronic Tesla Restrictor (ETR) as described in, e.g., EP 2 435 682 B1. The fuel supply amount can also be adjusted by means of a direct or indirect fuel injection system.

As indicated above, whether or not a change of the first quantitative value within the change determining step is detected allows drawing a conclusion as to whether a combustion, has occurred in the change determining cycle or not. The detected combustion can particularly be a no-spark combustion or self ignition combustion. The occurrence of a no-spark combustion is mainly influenced by the temperature, the pressure and the air-fuel ratio of the air-fuel mixture, and also by the amount of radicals present in the air-fuel mixture. In use, when the combustion engine has reached a stable working temperature, the temperature and pressure of the air-fuel mixture and the amount of radicals in the air-fuel mixture is unlikely to change drastically within a short period of time. Thus, the tendency for a no-spark combustion to occur is then mainly influenced by the air-fuel ratio of the air-fuel mixture, wherein a leaner air-fuel ratio increases the tendency toward a no-spark combustion and a richer air-fuel ratio decreases the tendency toward a no-spark combustion. A lean air-fuel ratio has a higher portion of air as compared to a rich air-fuel ratio. It is also noted that a higher temperature of the air-fuel mixture increases the tendency toward a no-spark combustion.

By adjusting the air-fuel ratio to the rich side when no change has been detected in the change determining cycle, and by adjusting the air-fuel ratio to the lean side when a change has been detected in the change determining cycle, the air-fuel ratio can be adjusted substantially to a value located at or in proximity of a borderline between a value at which a change is detected and a value at which no change is detected. This borderline can be referred to as "no-spark combustion border" or "NSC-border". Such an air-fuel ratio at the borderline can represent a favorable operating state for a combustion engine. Moreover, this NSC-borderline air-fuel ratio is substantially the same for any type of fuel suitable for combustion engines, such as gasoline, ethanol or mixtures thereof. This means that even if a different fuel is used for the combustion engine, the control device adjusts the air-fuel ratio by increasing/decreasing the fuel supply amount and/or the air supply amount until the borderline air-fuel ratio is reached again. Thus, the combustion engine can automatically adapt itself to different fuel types.

Further advantageously, with the above configuration of the control device, when the ambient conditions and/or engine conditions change in such a way that the tendency toward detecting a change is decreased, e.g. when the ambient temperature rises, the ambient pressure rises and/or the engine temperature rises due to a high load or the like, the control device will automatically adjust the air-fuel ratio to the richer side. With this adjustment, the combustion temperature of the air-fuel mixture will cool down to thereby prevent overheating of the combustion engine. At the same time, depending on the air-fuel ratio before adjustment, particularly when starting with an air-fuel ratio of λ=1, the torque of the combustion engine will typically increase due to the richer air-fuel ratio, which is favorable when having a high load. It is noted that when starting the adjustment from an air-fuel ratio of λ=1, a richer air-fuel ratio will increase the torque of the combustion engine, whereas a leaner air-fuel ratio will increase the fuel efficiency of the combustion engine.

On the other hand, with the above configuration of the control device, when the ambient conditions and/or engine conditions change in such a way that the tendency toward detecting a change is increased, e.g. when the ambient temperature becomes lower, the ambient pressure becomes lower and/or the engine temperature becomes lower due to a cold start or the like, the control device will automatically adjust the air-fuel ratio to the leaner side. With this adjustment, the fuel efficiency of the combustion engine is increased and, at the same time, the combustion engine is heated up more quickly to reach the working temperature.

Preferably, the control device further comprises a second output for controlling sparking actions of a spark plug.

The sparking actions controlled by the second output of the control device include at least the generation of a spark during one cycle of the combustion chamber and the suppressed generation of a spark during another cycle of the combustion chamber. The sparking action may further include varying the timing of the generation of a spark during another cycle of the combustion chamber.

The generation of a spark during one cycle of the combustion chamber may be associated to a normal operating cycle. Varying the timing of the generation of a spark during one cycle of the combustion chamber may be associated to an activation cycle. Furthermore, the suppressed generation of a spark during one cycle of the combustion chamber may be associated to a change determining cycle, in which the change determining step is performed. The activation cycle is preferably directly preceding the change determining cycle.

Varying the timing of the generation of a spark can comprise delaying or advancing the timing of the generation of a spark. Varying the timing of the generation of a spark can also be referred to as adjusting timing of the generation of a spark or shifting timing of the generation of a spark. For decreasing the tendency toward detecting a change in the change determining cycle in which a spark is suppressed, the timing of the generation of a spark in the activation cycle prior to the change determining cycle can be delayed. For increasing the tendency toward detecting a change in the change determining cycle, the timing of the generation of a spark in the activation cycle prior to the change determining cycle can be advanced.

Preferably, the control device is further configured such that a first second output signal is provided at the second output for one cycle of the combustion chamber; a second second output signal different from the first second output signal is provided at the second output for a first following cycle of the combustion chamber; and a third second output signal different from the second second output signal is provided at the second output for a second following cycle of the combustion chamber.

The second second output signal of the second output of the control device may be provided in a cycle of the combustion chamber directly following the cycle of the first second output signal of the second output of the control device, and the third second output signal of the second output of the control device may be provided in a cycle of the combustion chamber directly following the cycle of the second second output signal of the second output of the control device.

According to a first alternative, the first second output signal may be associated to a normal operating cycle, the second second output signal may be associated to a change determining cycle and the third second output signal may be associated to a normal operating cycle. For the first input signal provided at the first input, the first first quantitative value may be associated to the normal operating cycle and the second first quantitative value may be associated to the change determining cycle. For the first output signal provided at the first output, the adjustment of the component of the combustion engine may be associated to a following normal operating cycle which may follow the change determining cycle or is immediately adjusted in the change determining cycle.

According to a second alternative, the first second output signal may be associated to a normal operating cycle, the second second output signal may be associated to an activation cycle and the third second output signal may be associated to a change determining cycle. For the first input signal provided at the first input, the first first quantitative value may be associated to the activation cycle and the second first quantitative value may be associated to the change determining cycle. In an alternative configuration, the first first quantitative value may be associated to the normal operating cycle and the second first quantitative value may be associated to the change determining cycle. For the first output signal provided at the first output, the adjustment of the component of the combustion engine may be associated to a following normal operating cycle which may follow the change determining cycle or is immediately adjusted in the change determining cycle.

Preferably, the first second output signal is configured to generate a spark at a first crankshaft angle during a cycle of the combustion chamber, the second second output signal is configured to generate a spark at a second crankshaft angle during a cycle of the combustion chamber different to the first crankshaft angle, and the third second output signal is configured to suppress generation of a spark.

For the second alternative described above, the first crankshaft angle represented by the first second output signal may be associated to a normal operating cycle. The first crankshaft angle may be optimized for the normal operation conditions of the combustion engine. The second crankshaft angle represented by the second second output signal may be associated to an activation cycle. The second crankshaft angle may be a crankshaft angle slightly delaying or advancing the first crankshaft angle. Advantageously, a sparking action performed at the second crankshaft angle may initiate an activation action which influences the combustion of the change determining cycle. The third second output signal may be associated to the change determining cycle and may be represented by suppressing the generation of a spark during the cycle.

Preferably, the control device further comprises a second input for information regarding a rotation of a crankshaft of the engine.

The second input may be provided by a separate sensor device capable of sensing the crankshaft information. The information regarding a rotation of the crankshaft can be used for the determination of the actual crankshaft angle and therefore for the exact timing of the sparking actions. However, it is also possible to extract the information regarding a rotation of the crankshaft angle from periodical information provided at the first input of the control device, e.g. by analyzing the temperature or pressure profile.

A combination of the information at the first and second input of the control device may further improve the determination of the actual crankshaft angle.

According to another aspect of the present invention, a method for controlling a combustion engine is provided, comprising: determining a first output based on a first input for information of a combustion of one cycle of a combustion chamber of the engine and a first input for information of a combustion of a preceding cycle of a combustion chamber of the engine; and controlling a component of the engine by the first output.

The steps are preferably carried out in the sequence as indicated above. The indications made above with respect to the combustion engine of the present application apply mutatis mutandis to the method of the present application.

According to another aspect of the present invention, a computer program product is provided, comprising computer-readable instructions, which, when loaded and executed on a computer system, cause the computer system to perform operations according to the above described method.

The computer system can be a control device of the combustion engine, particularly an ECU of the combustion engine. The indications made above with respect to the control device for a combustion engine and the method of the present application apply mutatis mutandis to the computer program product of the present application.

In the following, preferred embodiments of the present invention will be described with reference to the accompanying figures.
- **Fig. 1**: shows a schematic illustration of a combustion engine in which a control device according to an embodiment is implemented;
- **Fig. 2**: shows a diagram illustrating the influence of a measured CO-content of the exhaust gas and a measured cylinder temperature of the combustion engine on the occurrence of a no-spark combustion;
- **Fig. 3**: shows a diagram illustrating a possible adjustment of the air-fuel ratio;
- **Fig. 4**: shows a diagram illustrating a control area for an operation of the combustion engine at low ambient temperatures;
- **Fig. 5**: shows a diagram illustrating a control area for an operation of the combustion engine at high ambient temperatures;
- **Fig. 6**: shows a diagram illustrating the influence of an activation action by varying ignition timing on the no-spark combustion border;
- **Fig. 7**: shows a table illustrating a possible variation of the activation action depending on the rotation speed of the combustion engine;
- **Fig. 8**: shows a sequence diagram for a possible control of the combustion engine;
- **Fig. 9**: shows a perspective view of another combustion engine controlled by the control device according to the embodiment (two stroke!);
- **Fig. 10**: shows an exploded view of a temperature sensor;
- **Fig. 11**: shows a perspective view of the temperature sensor of Fig. 10;
- **Fig. 12**: shows a schematic illustration of the temperature sensor of Figs. 10 and 11 in a side view;
- **Fig. 13**: shows a schematic illustration of the control device of the embodiment;
- **Fig. 14**: shows a schematic illustration of the electronic circuit of the temperature sensor;
- **Fig. 15**: shows temperature measurement results obtained by the control device in which no no-spark combustion has occurred;
- **Fig. 16**: shows temperature measurement results obtained by the control device in which a no-spark combustion has occurred.

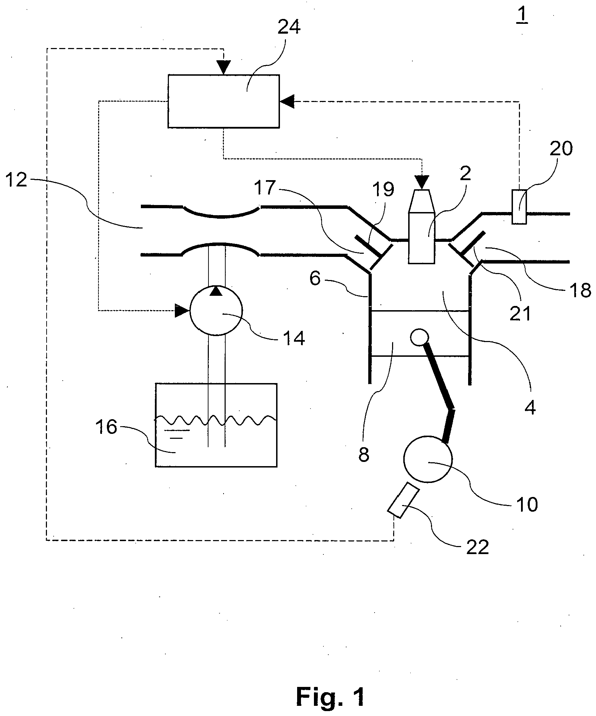

Fig. 1 shows a schematic illustration of a combustion engine 1 in which a control device according to an embodiment is implemented. The combustion engine 1 comprises a spark plug 2 for igniting an air-fuel mixture in the combustion chamber 4. The combustion chamber 4 is delimited by a cylinder 6 and a piston 8 which is reciprocatingly movable in within the cylinder 6. The piston 8 is connected to a crank shaft 10 via a connecting rod. Air is sucked in from an air intake 12 and mixed with fuel to form an air-fuel mixture which then enters the combustion chamber 4 via the intake port 17. The fuel is introduced into the intake air by a fuel supply means 14, which can be an electronic carburetor such as an Electronic Tesla Restrictor, for example. By controlling the fuel supply means 14, i.e. a component of the combustion engine 1, by a first output of the control device 24, an air-fuel ratio of the air-fuel mixture can be adjusted. The fuel supply means 14 draws fuel from the fuel tank 16. The fuel can be gasoline, ethanol, a mixture of gasoline and ethanol, or any other fuel suitable for a combustion engine.

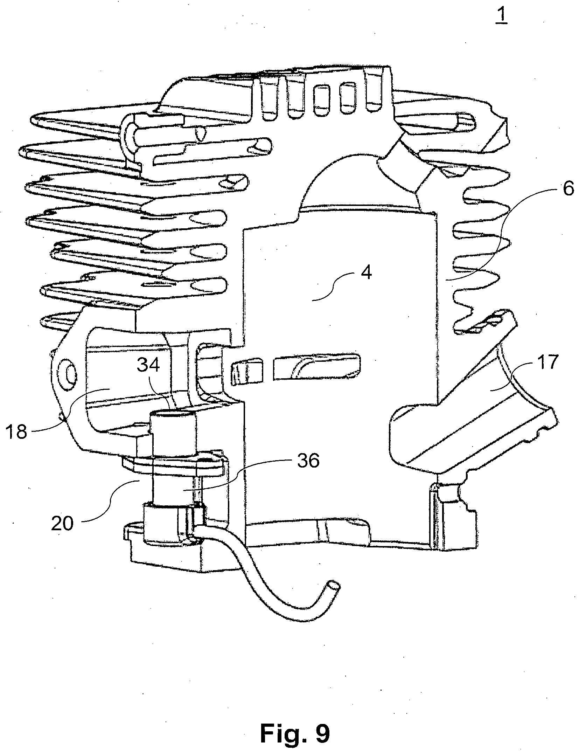

On the exhaust side of the combustion chamber 4, namely in proximity of the exhaust port 18, a temperature sensor 20 is arranged as a means for providing a first input signal to a first input. Since the combustion engine 1 schematically illustrated in Fig. 1 is a four stroke engine, an intake valve 19 and an exhaust valve 21 is provided for controlling the air-fuel mixture intake from the intake port 17 and the exhaust of exhaust gas from the exhaust port 18, respectively. In case of a two stroke engine, such as one shown in Fig. 9, no intake valve and exhaust valve is provided and the arrangement of the intake port 17 and exhaust port 18 is different. It is noted that the combustion engine 1 controlled by the control device 24 of the present invention can be a four stroke engine or a two stroke engine. In the combustion engines 1, a rotation sensor 22 is arranged at the crank shaft 10 to detect the rotation angle and/or speed of the crank shaft 10 and the combustion engine 1 as a second input of the control device 24.

The spark plug 2, the temperature sensor 20, the fuel supply means 14 and the rotation sensor 22 are connected to the control device 24 according to the present embodiment. The control device 24 can control sparking actions of the spark plug 2 by the second output. In particular, the control device 24 can generate a spark by the spark plug 2 during one cycle of the combustion chamber 4 at a selected timing. The control device 24 can also selectively suppress the generation of a spark by the spark plug 2 during one or more cycles of the combustion chamber 4. During normal operation, the spark timing of the spark plug 2, i.e. the ignition timing by the spark plug 2 during the normal operating cycles, is set to a timing for optimal power output and minimal emissions, in a range of e.g. 22° to 32° crank angle before top dead center (CA BTDC). In the present embodiment, the spark timing of the spark plug 2 during the normal operating cycles is 25° CA BTDC. However, the control device 24 can also selectively carry out an activation cycle in which the spark timing of the spark plug 2 is varied as compared to the spark timing during the normal operation cycles. The varying of the timing of the generation of a spark in the activation cycle is considered an activation action to increase or decrease the tendency toward detecting a change at the first input in a change determining cycle of the combustion chamber 4 in which the spark is suppressed and which follows the activation cycle. In the present embodiment, the spark timing of the spark plug 2 is delayed as compared to the spark timing during normal operation in the activation cycle, e.g. at 5° CA BTDC in order to decrease the tendency toward detecting a change at the first input in a change determining cycle. It is noted that also an advanced spark timing in the activation cycle with respect to the normal operating cycle is possible as an activation action to increase the tendency toward detecting a change of the first input in a change determining cycle following the activation cycle. The activation cycle will be described in more detail later. The crank angle is detected by the rotation sensor 22 and is provided to a second input of the control device 24.

During operation of the combustion engine 1, the control device 24 is configured to carry out the activation cycle and then, in the following cycle, carry out the change determining cycle, and detect whether a change at the first input has occurred in the change determining cycle or not. If no change is detected in the change determining cycle, the control device 24 determines that a no-spark combustion has occurred in the change determining cycle and controls the fuel supply means 14 in order to adjust the air-fuel ratio to the rich side. If a change is detected in the change determining cycle, the control device 24 determines that no no-spark combustion has occurred in the change determining cycle and controls the fuel supply means 14 in order to adjust the air-fuel ratio to the lean side. The control strategy and the configuration of the control device will be described in more detail later.

The temperature sensor 20 measures the temperature of the exhaust gas directly at or in proximity of the exhaust port 18 and provides the temperature signal to the first input of the control device 24. The temperature sensor 20 has a fast response time so that a temperature difference of an exhaust gas of two following cycles can be detected. The control device 24 compares the exhaust gas temperature of the change determining cycle with at least one exhaust gas temperature of a preceding activation cycle. If the exhaust gas temperature drops in the change determining cycle, it is determined that a change, i.e. no no-spark combustion, has occurred in the change determining cycle, whereas if the exhaust gas temperature rises or stays substantially the same in the change determining cycle, it is determined that no change, i.e. a no-spark combustion, has occurred in the change determining cycle. Since the control device 24 merely requires information regarding the change in the exhaust gas temperature for detecting a no-spark combustion, the temperature sensor 20 is not required to provide accurate absolute temperature values. A no-spark combustion can also be referred to as a self ignition combustion. The temperature sensor 20 of the present embodiment will be described in more detail later.

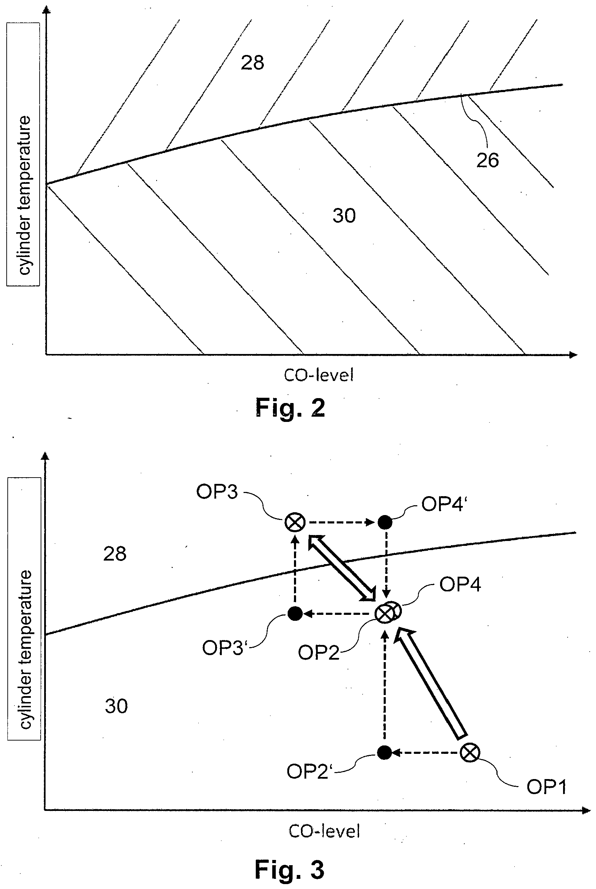

Fig. 2 shows a diagram illustrating the influence of a measured CO-content of the exhaust gas and a measured cylinder temperature of the combustion engine 1 on the occurrence of a no-spark combustion. The no-spark combustion refers to a combustion of an air-fuel mixture in the combustion chamber which is not initiated by a spark of the spark plug. In the no-spark combustion, the air-fuel mixture in the combustion chamber is ignited by the compression heat of the air-fuel mixture and/or by hot parts in the combustion chamber and/or by radicals present in the air-fuel mixture. The no-spark combustion can also be referred to as a self ignition combustion. The occurrence of a no-spark combustion is mainly influenced by the temperature, the pressure and the air-fuel ratio of the air-fuel mixture, and also by the amount of radicals present in the air-fuel mixture, before the ignition of the air-fuel mixture in the compression stroke. In the abscissa (x-axis) of the diagram, the CO content of the exhaust gas is indicated. In the ordinate (y-axis), the cylinder temperature of the combustion engine 1 is indicated. The diagram of Fig. 2 is based on experimental data obtained on a test bench. It is noted that the combustion engine 1 controlled by the control device 24 of the present embodiment neither measures the CO content of the exhaust gas, nor the cylinder temperature of the combustion engine 1. Nevertheless, the diagram is used to explain the influence of the air-fuel ratio of the air-fuel mixture and the operating conditions, i.e. the ambient and engine conditions, on the occurrence of no-spark combustions, which can detected in the change determining cycles according to the present embodiment.

In particular, the CO content of the exhaust gas is directly correlated to the air-fuel ratio of the air-fuel mixture burned in the combustion chamber 4. At a CO content of 0%, the air-fuel ratio is approximately λ=1. A high CO content, thus, indicates a rich air-fuel mixture, whereas a low CO content indicates a lean air-fuel mixture. Accordingly, the abscissa also represents the air-fuel ratio of the air-fuel mixture. On the other hand, the cylinder temperature is correlated to the operating conditions of the combustion engine 1. When the ambient temperature is high and/or when the combustion engine 1 runs at a high load for a long time, the cylinder temperature rises. With a high ambient and cylinder temperature, the air-fuel mixture will also have a higher temperature and will particularly reach a higher temperature during compression, which increases the tendency toward a no-spark combustion and which in turn decreases the tendency of the control device 24 to detect a change in the change determining cycle.

The line 26 represents the no-spark combustion border ("NSC-border"), i.e. a borderline between values at which a change is detected and values at which no change is detected in a change determining cycle. In the no-spark combustion region ("NSC region") 28 above the NSC-border 26, a no-spark combustion occurs. In the no no-spark combustion region ("no NSC region") 30 below the NSC-border 26, a no-spark combustion does not occur. It is noted that the NSC-border 26 indicated in Fig. 2 was determined on a test bench, wherein the combustion engine 1 was run, starting from a cool cylinder, at full load and constant rotation speed with a fixed air-fuel ratio until a no-spark combustion was detected. This was carried out at different fixed air-fuel ratios to obtain the NSC-border line, wherein the varied spark timing (activation cycle) for increasing the tendency toward a no-spark combustion in the no-spark-ignition stroke for detecting the no-spark combustion was kept constant. The control for finding a stable operating point at the NSC-border 26 according to the present embodiment is described below with reference to Fig. 3.

Fig. 3 shows a diagram illustrating a possible adjustment of the air-fuel ratio by the control device 24. At operating point OP1, e.g. shortly after starting the combustion engine 1, the first change determining cycle is carried out. Since shortly after the start of the combustion engine 1, the engine is still cold and, thus, OP1 lies in the no NSC region, a change is detected, i.e. no no-spark combustion is detected. It is noted that the control device 24, in the present case, is configured to start with a rich air-fuel ratio. Since no no-spark combustion is detected, the control device 24 adjusts the air-fuel ratio to the leaner side, so that the operating point is changed to OP2'. Then, after a certain amount of cycles or time, the second change determining cycle is carried out at OP2. Since the air-fuel ratio is now leaner, the combustion engine 1 has heated up more quickly and has a higher temperature at OP2. Since OP2 is still in the no NSC region, a change is detected and the control device 24 adjusts the air-fuel ratio even more leaner to OP3'. Then, again after a certain amount of cycles or time, a third change determining cycle is carried out at OP3. Since the air-fuel ratio is now even more leaner, the combustion engine 1 has reached an even higher temperature at OP3, so that OP3 now lies in the NSC region. Thus, no change is detected, i.e. a no-spark combustion is detected, at OP3. Accordingly, the control device 24 now adjusts the air-fuel ratio to the richer side to OP4'. When after a certain amount of cycles or time, a fourth change determining cycle is carried out at OP4, the combustion engine 1 has cooled down because of the richer air-fuel ratio, so that OP4 substantially corresponds to OP2 in the present illustrative case. With a continued control under the same ambient conditions, the combustion engine 1 would now circle around along the operating points OP2/OP4, OP3', OP3 and OP4'. In practice, the operating points are more likely to circle around along varying operating points approximately around a point or area on the NSC-border, which can be considered the stable control point or stable control area for the given operating conditions. This, however, depends on the control strategy applied, which will be described in more detail later.

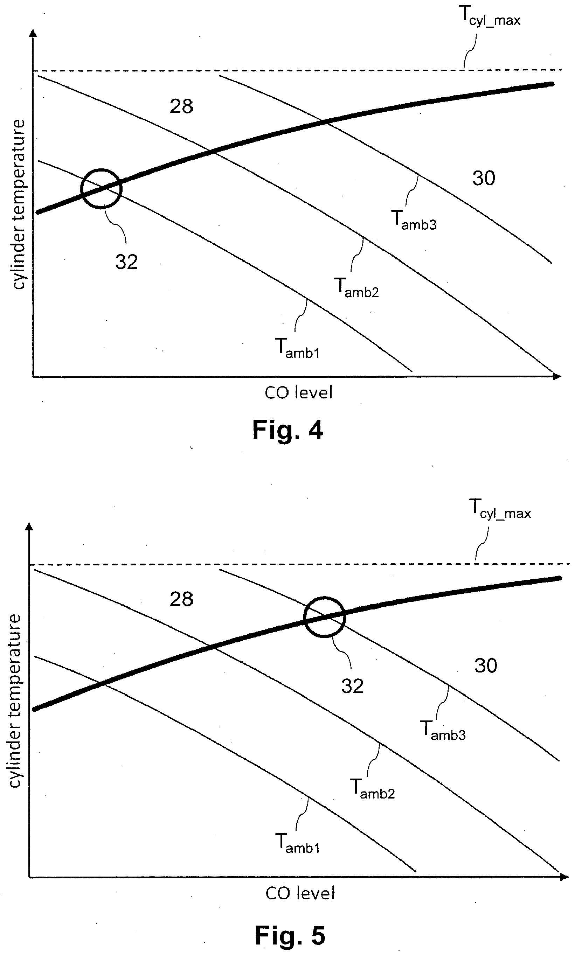

Fig. 4 and Fig. 5 show diagrams illustrating stable control areas 32 for different operating conditions of the combustion engine 1, namely different ambient temperatures. In Figs. 4 and 5, the lines T_{amb1}, T_{amb2} and T_{amb3} represent lines of equal ambient temperature (isothermal lines), wherein T_{amb1} represents the isothermal line of a low ambient temperature, T_{amb2} represents the isothermal line of a medium ambient temperature and T_{amb3} represents the isothermal line of a high ambient temperature. The isothermal lines for the respective ambient temperatures were determined on a test bench by running the combustion engine at a certain constant rotation speed and full load but at different air-fuel ratios. At a low ambient temperature, the cylinder temperature will be lower than at a high ambient temperature for the same air-fuel ratio, due to the stronger cooling of the combustion engine by the ambient air. The line T_{cyl_max} represents the maximum permissible cylinder temperature above which damage of the combustion engine might occur.

In Fig. 4, the case is shown when the combustion engine 1 is operated at low ambient temperatures, e.g. in winter. In this case, since the ambient temperature is low, the cylinder temperature is also low due to the stronger cooling of the cylinder by the ambient air, which results in a low tendency of a no-spark combustion occurring (i.e. a high tendency of a change of the first input occurring), so that the control device 24 will adjust the air-fuel ratio more to the leaner side until the NSC-border is reached. Thus, the stable control area 32, i.e. the area around the stable operating point in which the control device 24 will adjust the air-fuel ratio to, will be shifted to the leaner side. Advantageously, this increases the fuel efficiency of the combustion engine 1 without the danger of overheating.

On the other hand, in Fig. 5, the case is shown when the combustion engine 1 is operated at high ambient temperatures, e.g. in summer. In this case, since the ambient temperature is high, the cylinder temperature is also high due to the reduced cooling of the cylinder by the ambient air, which results in a high tendency of a no-spark combustion occurring (i.e. a low tendency of a change of the first input occurring), so that the control device 24 will adjust the air-fuel ratio more to the richer side until the NSC-border is reached. Thus, the stable control area 32 will be shifted to the richer side. Advantageously, this will cool down the combustion engine 1 and typically provide more torque for handling the high load.

Figs. 4 and 5 illustrate the influence of only the ambient temperature on the stable control area set by the control device 24. It is noted that dirt present on the combustion engine 1, a change in the cooling air volume or any other condition of the combustion engine 1 having an influence on the cooling of the cylinder 6 of the combustion engine 1 will lead to a different adjustment of the air-fuel ratio. For example, dirt on the combustion engine 1 will reduce the cooling of the combustion engine 1, which leads to a higher cylinder temperature and, thus, to a richer air-fuel ratio, similar to the case of high ambient temperature. It is further noted that in the diagrams of Figs. 4 and 5, the combustion engine 1 was run constantly at full load, which leads to a high cylinder temperature. When the combustion engine 1 is run constantly at a low load, the cylinder will only reach a lower cylinder temperature, so that the air-fuel ratio will be adjusted to the leaner side until the NSC-border is reached.

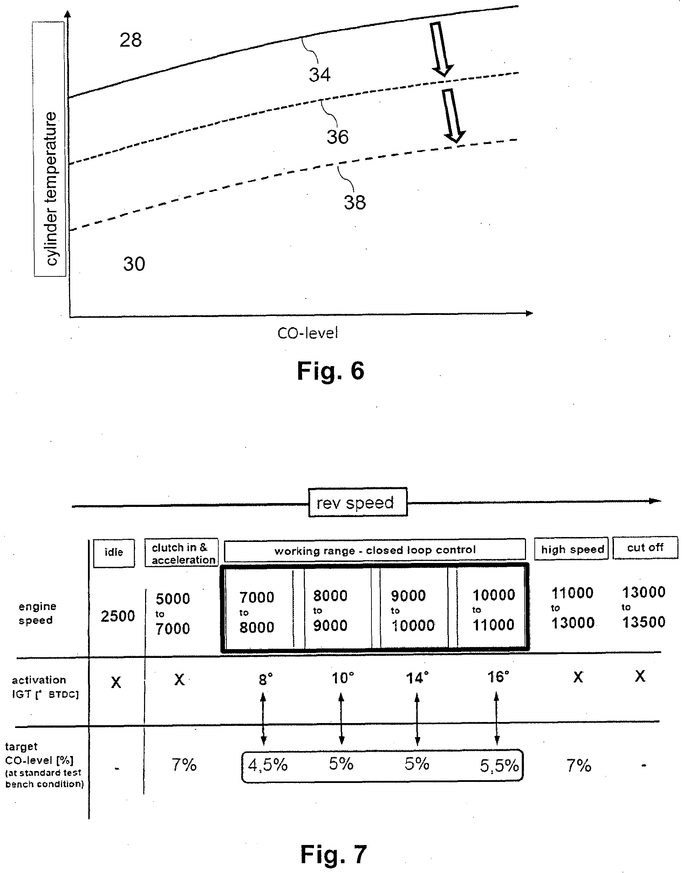

Fig. 6 shows a diagram illustrating the influence of an activation action in the activation cycle by varied ignition timing, particularly delayed ignition timing, on the NSC-border. As mentioned above, in the present embodiment, the activation action for decreasing the tendency toward a change, i.e. for increasing the tendency toward a no-spark combustion, in the change determining cycle is carried out as an activation cycle in which the spark timing of the spark plug 2 is delayed as compared to the spark timing in the spark-ignition stroke during the normal operation cycles. An activation action using varied spark timing, i.e. ignition timing, by the spark plug 2 is particularly advantageous in the present embodiment, since no additional means for carrying out the activation action is required.

By delaying the spark timing in an activation cycle prior to the change determining cycle, less energy is transmitted from the burning air-fuel mixture to the piston 8. It is assumed that this is the case due to the circumstance that the flame front follows the piston 8 as it moves away from the top dead position. As a consequence, the exhaust gas of the activation cycle with delayed spark timing has a higher temperature. Due to the higher temperature of the exhaust gas, the residual exhaust gas in the combustion chamber will have a higher temperature. Also, the inner surface of the cylinder 6 of the combustion engine 1 will heat up slightly. Accordingly, a tendency of a no-spark combustion occurring in the following change determining cycle increases. Moreover, the exhaust gas of the activation cycle with delayed spark timing includes more radicals which further increases the tendency of a no-spark combustion occurring in the following change determining cycle. Advantageously, a no-spark combustion occurring with an increased amount of radicals in the air-fuel mixture is known as an Activated Radical Combustion ("ARC"), which is known to provide a smooth self-ignition combustion at low temperatures due to the large number of evenly distributed radicals serving as combustion-initiating points. The effect of increasing the tendency toward a no-spark combustion in the following change determining cycle occurs when delaying the ignition timing in the activation cycle as compared to the ignition timing in the normal operating cycle, wherein the later the spark timing, the higher the effect of increasing the tendency toward a no-spark combustion. Preferably, the delayed ignition timing in the activation cycle is set within a range of spark timings of 20° to 0° CA BTDC. It is noted that when the rotation speeds of the engine are increased, the spark timing in the activation cycle can be advanced in order to obtain a constant activation effect.

In the diagram of Fig. 6, the line 34 represents a NSC-border for a spark timing of 25° CA BTDC in a normal operating cycle prior to a change determining cycle in which the occurrence of a change is detected. Since in the present embodiment, the ignition timing in the normal operating cycles is 25° CA BTDC, line 34 represents a NSC-border for a case where no activation action is carried out prior to the change determining cycle. Lines 36 and 38 represent NSC-borders for a delayed spark timing of 15° CA BTDC and 5° CA BTDC in an activation cycle prior to a change determining cycle, respectively. It can be identified that the NSC-borders 36 and 38 are shifted toward a cooler side substantially parallelly to the NSC-border 34 that involves no activation action. In other words, the activation action or activation cycle enables to temporarily, namely substantially for the following one cycle including the change determining cycle, shift the NSC-border to a cooler side as compared to the NSC-border of the actual normal operation. Since the change of the first input is only detected by the control device in said change determining cycles, the control device 24 will then adjust the air-fuel ratio at or in proximity of the NSC-border corresponding to the specific activation action of the activation cycle.

By identifying and quantifying the effect of the activation cycle on the NSC-border, the activation cycle can be used to set the air-fuel ratio to a desired value for a given operating condition. This concept can be applied also to other activation actions which allow to vary the effect of increasing or decreasing the tendency toward a no-spark combustion within a certain range, e.g. using a third output.

For example, on a test bench, the combustion engine with a disabled control can be run at a desired air-fuel ratio and under certain operating conditions, such as a certain ambient temperature, pressure and a certain load. For example, the operating conditions can be standard ambient conditions and a maximum load (full load). The desired air-fuel ratio can be freely selected in view of, for example, a balance of a sufficiently low stable operating temperature, fuel efficiency and torque of the combustion engine. The operating temperature of the combustion engine on the test bench can be measured at the cylinder, for example, and the air-fuel ratio can also be measured and identified at the test bench. Then, the control according to the present embodiment is turned on, and the control device 24 will repeatedly carry out the activation cycle, the change determining cycle including the detection of the change of the first input, and the adjustment of the air-fuel ratio. It is noted that at the test bench, the delayed spark timing of the activation cycle can be adjusted.

Starting from a certain air-fuel ratio, the control device 24 will eventually find a stable operating point at the NSC-border, i.e. a certain air-fuel ratio and a certain corresponding operating temperature of the combustion engine. This NSC-border, as explained above, depends on the activation cycle, particularly on the delayed spark timing in the activation cycle. The delayed spark timing of the activation cycle can now be varied at the test bench and the stable operating points corresponding to said delayed spark timings can be monitored. For example, if the air-fuel ratio of a stable operating point corresponding to a certain delayed spark timing is richer than the desired air-fuel ratio, this means that the tendency for a no-spark combustion occurring must be reduced so that the control device 24 can adjust the air-fuel ratio to a more leaner side, which in turn means that the delayed spark timing of the activation cycle must be shifted to a more earlier timing (and vice versa). Eventually, a delayed spark timing can be found at the test bench at which the stable operating point found by the control device 24 corresponds to the above mentioned desired air-fuel ratio. Said eventually found delayed spark timing for the activation cycle can now be loaded into the control device 24, and in actual use away from the test bench, the combustion engine 1 applying this specific activation cycle will always adjust the air-fuel ratio to the desired air-fuel ratio, for operating conditions which are the same as that of the test bench.

It is noted that the NSC-border can also be shifted substantially parallelly toward a hotter side as compared to the NSC-border of the actual normal operation by an activation action decreasing the tendency toward a no-spark combustion, e.g. by advanced ignition timing. The effect of decreasing the tendency toward a no-spark combustion in the following change determining cycle occurs when advancing the ignition timing in the activation cycle as compared to the ignition timing in the normal operating cycle , wherein the earlier the spark timing, the higher the effect of decreasing the tendency toward a no-spark combustion. Preferably, the advanced ignition timing in the activation cycle is set within a range of spark timings of 40° to 25° CA BTDC. Such a configuration can be applied if it is desired to run the combustion engine 1 by no-spark combustion (self ignition combustion) during normal operation. In such a case, the control device 24 will adjust the air-fuel ratio to a value on or in the proximity of the NSC-border in the change determining cycle, while during normal operation, i.e. during the normal operating cycles, the combustion engine 1 is operated in a region above the NSC-border. Such a configuration enables to ensure that the combustion engine 1 is run by no-spark combustion during normal operation. Furthermore, by adjusting the advanced ignition timing in the activation cycle, the self ignition timing of the no-spark combustion during the normal operating cycles can be precisely adjusted and optimized. It is noted that when the combustion engine 1 is run by no-spark combustion during normal operation, i.e. during the normal operating cycles at which sparks are generated at predetermined timings, the self ignition timing is before the spark timing. The spark by the spark plug 2 in such cycles then merely ensures that a combustion takes place in case no self ignition occurs, particularly during the time until a combustion engine 1 starting from a rich air-fuel ratio finds a stable control area.

Based on the concept of setting the air-fuel ratio to a desired value for a given operating condition by adjusting the spark timing of the activation cycle, it is also possible to vary the desired value for the air-fuel ratio depending on a condition of the engine and/or an ambient condition.

Fig. 7 shows a table illustrating a possible variation of the activation action, specifically the delayed spark timing of the activation cycle, depending on the rotation speed of the combustion engine 1 provided at the second input. As explained above, by varying the delayed spark timing of the activation cycle, a desired air-fuel ratio can be obtained for a given operating condition. Now, by varying the delayed spark timing of the activation cycle depending on the rotation speed of the combustion engine 1, a desired value for the air-fuel ratio, to which the control device 24 will adjust the air-fuel ratio to, can be varied over the rotation speed.

For example, the working range of the combustion engine 1 of 7000 rpm to 11000 rpm can be evenly split into four ranges. The control device 24 can be configured such that, in the range from 7000 rpm to 8000 rpm, the delayed spark timing of the activation cycle is set to 8° CA BTDC, which leads to an adjusted air-fuel ratio corresponding to 4.5% CO content. Thus, at low rotation speeds, where the loads are low and the danger of overheating is also low, the air-fuel ratio adjusted by the control device 24 will be lean, so that the combustion engine 1 will be fuel efficient. In the range from 8000 rpm to 9000 rpm, the delayed spark timing of the activation cycle is set to 10° CA BTDC, which leads to an adjusted air-fuel ratio corresponding to 5% CO content. Thus, at medium rotation speeds, where the loads are medium and the danger of overheating is medium, the air-fuel ratio adjusted by the control device 24 will be neither very lean nor very rich, to provide a good balance between fuel efficiency and torque output. The adjusted air-fuel ratio for the range from 9000 rpm to 10000 rpm is the same as for the range from 8000 rpm to 9000 rpm. However, as the temperature of the combustion engine 1 is higher at the higher rotation speed, and the content of residual gas in the combustion chamber also increases with the rotation speed, the delayed spark timing of the activation cycle must be shifted to an earlier value of 14° CA BTDC. In the range from 10000 rpm to 11000 rpm, the delayed spark timing of the activation cycle is set to 16° CA BTDC, which leads to an adjusted air-fuel ratio corresponding to 5.5% CO content. Thus, at high rotation speeds, where the loads are high and the danger of overheating is high, the air-fuel ratio adjusted by the control device 24 will be rich, to provide high torque output and to prevent overheating of the combustion engine 1. In the ranges 5000 rpm to 7000 rpm and 11000 rpm to 13000 rpm at both edges of the working range, the air-fuel ratio adjustment can be shut off and a predetermined rich air-fuel ratio value (e.g. corresponding to 7% CO content) can be set, which ensures good engine starting properties and prevents overheating.

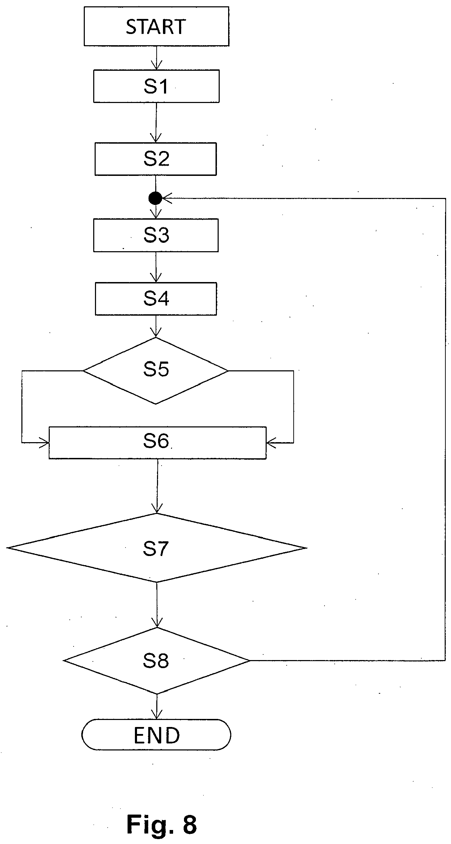

Fig. 8 shows a sequence diagram for a possible control of the combustion engine. After the combustion engine 1 has been started, the control device 24 will carry out normal operating cycles to run the combustion engine 1 at S1. After a certain amount of cycles or time, the control device 24 will start the air-fuel ratio adjusting routine at S2. In the air-fuel ratio adjusting routine, first, the control device 24 will carry out an activation action at S3, such as an activation cycle in which the spark timing of the spark plug is delayed, so as to increase the temperature and the amount of radicals in the exhaust gas of the activation cycle. Then, in S4, in the cycle directly following the activation cycle, the control device 24 carries out a change determining cycle in which the generation of a spark by the spark plug 2 is suppressed. In the following step S5, the control device detects whether a change has occurred in the change determining cycle or not. In S6, the control device adjusts the air-fuel ratio of the air-fuel mixture depending on the result in S5. If no change was detected in S5, the control device 24 will adjust the air-fuel ratio to the richer side. If a change was detected in S5, the control device 24 will adjust the air-fuel ratio to the leaner side. In S7, a judgement is made whether the adjusted air-fuel ratio is a suitable air-fuel ratio or not, for example by comparing the current detection result of S5 with previous detection of S5, or the like. In S8, a judgement is made whether to continue the air-fuel ratio adjusting routine, in case of which the control device 24 will return to step S3 again after a certain amount of cycles, or whether to end the air-fuel ratio adjusting routine, based on the judgement of S7.

Fig. 9 shows a perspective sectional view of another combustion engine 1, particularly a cylinder portion thereof, comprising the temperature sensor 20and controlled by the control device 24 of the present embodiment. It is noted that the combustion engine 1 shown in Fig. 9 is a two-stroke engine having one cylinder 6. The piston and the spark plug of the combustion engine 1 are not shown in Fig. 9. The combustion engine 1 comprises an intake port 17 for intaking an air-fuel mixture into the combustion chamber 4, and an exhaust port 18 for discharging the exhaust gas from the combustion chamber 4 into the exhaust system (not shown) after combustion of the air-fuel mixture.

The temperature sensor 20 is mounted to the combustion engine 1 at a position at or in proximity of the exhaust port 18. The temperature sensor 20 is arranged such that the infrared light emitting element 34 thereof is arranged in the stream of exhaust gas in the exhaust port 18 or the exhaust system. In particular, the infrared light emitting element 34 is arranged at a position at which exhaust gas from the combustion chamber 4 directly hits the infrared light emitting element 34 with high velocity, preferably at an angle of about 20° to 50° with respect to the surface of the infrared light emitting element 34. The temperature sensor 20 is arranged such that the part of the holder 36 containing the optical sensor sticks out from the combustion engine 1 and is surrounded by ambient air, preferably in a stream of cooling air.

It is noted that the temperature sensor 20 not only can be used for detecting the occurrence of a no-spark combustion, but can also be used for identifying overheating of the combustion engine 1 to prevent a piston meltdown (blow up). It is further noted that the combustion engine 1 can comprise a further temperature sensor, particularly a thermocouple, in order to enable the control device 24 to calculate an absolute temperature, to identify a cold start or warm start and/or to compensate a temperature drift of the optical sensor arranged in the temperature sensor 20.

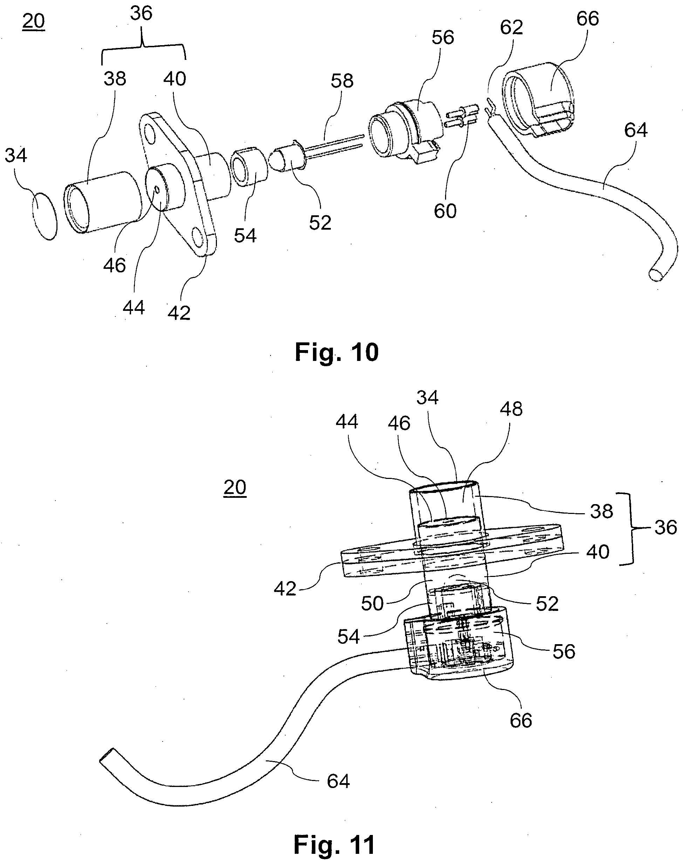

Figs. 10 and 11 show the components of the temperature sensor 20, wherein Fig. 11 shows the mounted state of the temperature sensor 20. The temperature sensor 20 comprises the infrared light emitting element 34 in form of a circular metallic membrane or sheet, which is arranged at an axial end of the holder 36. The holder 36 comprises a bushing 38 and a tube 40. A mounting flange 42 is fixed to the tube 40 for mounting the temperature sensor 20 to the combustion engine 1. The infrared light emitting element 34 is crimped to the front axial end of the bushing 38. A thermal isolator (not shown) can be arranged between the crimped portions of the bushing and the infrared light emitting element 34. The bushing 38 can be molded, machined or stamped and can be formed of material having low thermal conductivity. The tube 40 includes a wall 44 at its front axial end, wherein a pinhole 46 is formed in the center of the wall 44. The tube 40 can be molded, machined or stamped and can be formed of material having low thermal conductivity. The tube 40 and the wall 44 can be formed from one part, or the wall 44 can be formed separately and fixed to the tube 40. The tube 40 can have a thin wall thickness of about 0.1 mm or less to have low axial thermal conductivity.

The bushing 38 and the tube 40 can be fixed together by welding, brazing, press fitting or by adhesive bonding. In the mounted state, a first chamber 48 is formed in the holder 36 between the infrared light emitting element 34 and the wall 44, and a second chamber 50 is formed between the wall 44 and the axial end of the holder 36 opposing the infrared light emitting element 34. An optical sensor 52, preferably a diode, for detecting infrared light emitted from the infrared light emitting element 34 is arranged within the holder 40 in the second chamber 50. Since the optical sensor 52 is arranged in the second chamber 50 separated from the first chamber 48 by the wall 44, the optical sensor 52 is shielded from the heat of the exhaust gas and the parts of the temperature sensor 20 in contact with the exhaust gas, particularly heat from the infrared light emitting element 34 and the bushing 38.

The optical sensor 52 is held in place within the second chamber 50 by a ring 54 surrounding the optical sensor 52, which can be formed of a thermally isolating material. The optical sensor 52 is further held in place by a base 56. The base 56 is fixed to the holder 36 by welding, brazing, press fitting or by adhesive bonding, and closes the open axial end of the tube 40 opposing the wall 44. The base 56 can be formed of a thermally isolating material. Pins 58 of the optical sensor 52 extend through the base 56 and are connected to electrical connectors 60 which electrically connect the pins 58 with electrical conductors 62 of the connecting cord 64 of the temperature sensor 20. The connecting cord 64 is connected to the control device 24. An end cap 66 covers the base 56 and forms the axial end of the temperature sensor 20 opposing the infrared light emitting element 34. It is noted that the temperature sensor 20 of the present embodiment constitutes a two-wire system, but a three-wire system can also be applied according to the need. While a two-wire system has a non-linear signal output but substantially no noise, a three-wire system has a linear signal output but is sensitive to noise.

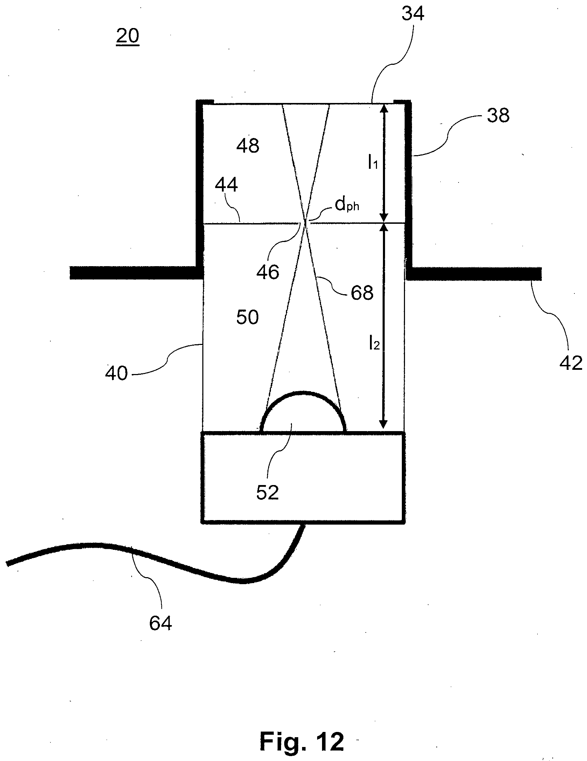

Fig. 12 illustrates the optical path 68 of the infrared light emitted from the infrared light emitting element 34 and reaching the optical sensor 52 after having passed through the first chamber 48, the pinhole 46 and the second chamber 50. The optical path 68 is substantially determined by the relationship of the distance I₁ between the infrared light emitting element 34 and the pinhole 46, the distance I₂ between the pinhole 46 and the optical sensor 52 and the diameter dₚₕ of the pinhole 46. The parameters I₁, I₂ and dₚₕ are set such that only infrared light from a center portion of the infrared light emitting element 34 reaches the optical sensor 52, wherein said center portion of the infrared light emitting element 34 constitutes less than 50%, preferably less than 30%, of the overall surface area of the infrared light emitting element 34. The center portion of the infrared light emitting element 34, the center of the pinhole 46 and the center of the optical sensor 52 are aligned along an axis. Also, the optical axis of the pinhole 46 and the optical axis of the optical sensor 52 coincide. The overall distance between the infrared light emitting element 34 and the optical sensor 52 (i.e. I₁ + I₂), can be in a range of about 15 mm to about 90 mm, preferably about 30 mm to about 50 mm. The diameter dₚₕ of the pinhole can be in a range of about 0.1 mm and about 2 mm. It is noted that more than one optical sensor 52 having different sensitivities in different radiation intensity ranges can be arranged in the second chamber 50. Thereby, a temperature sensor 20 can be provided which can provide more accurate results within a broader temperature range. In such a case, the optical path 68 can be configured such that infrared light from the infrared light emitting element 34 reaches all optical sensors 52. Alternatively, further pinholes 46 can be provided to direct the infrared light onto the respective optical sensors 52.

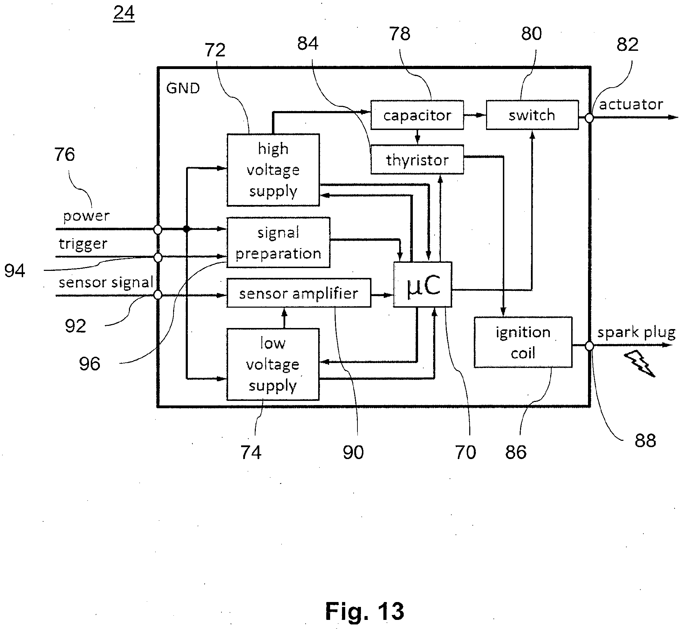

Fig. 13 shows a schematic illustration of the control device 24 according to the embodiment. The control device 24 comprises a microcontroller 70, components which manage the power supply of the control device, components dedicated for the input of information and components dedicated for the output of information. The power supply of the control device 24 is divided in a high voltage supply 72 and a low voltage supply 74 which both receive their power from an external electrical power source 76.

The high voltage supply 72 is capable of providing voltages in a range from 0 to 250V. The high voltage is provided to a capacitor unit 78, wherein the capacitor unit 78 may comprise more than one capacitor. The high voltage stored in the capacitor unit 78 is provided to the output components of the control device 24 when the microcontroller 70 enables the respective output component. For the first output of the control device 24, the enabling is performed when the microcontroller 70 turns on a switch 80 and the first output signal is provided at a first output terminal 82. In the present embodiment, the first output terminal 82 is connected to the fuel supply means 14 and the first output signal controls an air/fuel ratio of an air-fuel mixture provided to the intake port 17. For the second output of the control device 24, the enabling is performed when the microcontroller 70 turns on a thyristor 84, which provides pulses to an ignition coil 86 capable of providing a high voltage at a second output terminal 88. In the present embodiment, the second output terminal 88 is connected to the spark plug 2 and the second output signal controls a sparking action.

The low power supply 74 is capable of providing voltages in a range from 0 to 12V. The low voltage provides power to the microcontroller 70 and to a sensor amplifier 90. The sensor amplifier 90 receives a sensor signal at a first input terminal 92 of the control device 24, amplifies the received sensor signal and provides the amplified sensor signal to the microcontroller 70. In the present embodiment, the first input terminal 92 is connected to the temperature sensor 20.

Furthermore, for the timing operations of the microcontroller 70, the control device 24 receives an external trigger signal at a second input terminal 94, which is used in a signal preparation 96 to provide a suitable trigger signal for the microcontroller 70. The signal preparation 96 is directly powered by the external power source 76. In the present embodiment, the second input terminal 94 is connected to the rotation sensor 22. The microcontroller 70 comprises a processor core and memory for processing and storing the received information from the inputs and to provide processing results to the outputs.

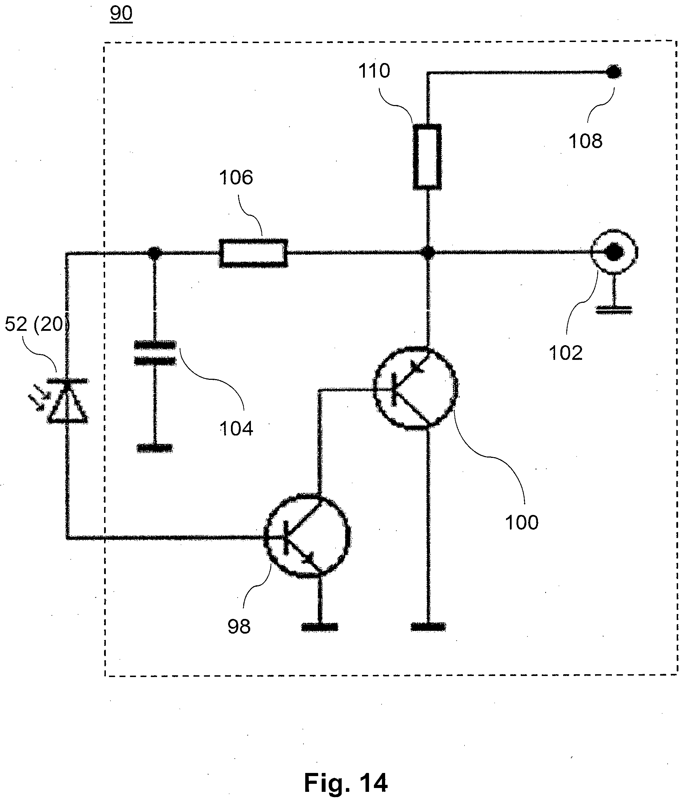

Fig. 14 shows a schematic illustration of the electronic circuit of the temperature sensor 20. The optical sensor 52 of temperature sensor 20 is provided as a diode for infrared light and is connected to the sensor amplifier 90 of the control device 24.

The anode of the diode is connected to the base of a NPN bipolar transistor 98. The emitter of the transistor 98 is connected to ground and the collector of the transistor 98 to the base of a PNP bipolar transistor 100. The collector of the transistor 100 is connected to ground and the emitter of the transistor 100 is connected to the signal out terminal 102. The cathode of the diode is connected to a grounded capacitor 104 and to a resistor 106, which is connected to the signal output terminal 102. The sensor amplifier 90 is powered by the low voltage supply 74 at a power supply terminal 108 via a resistor 110 which is connected to the signal out terminal 102.

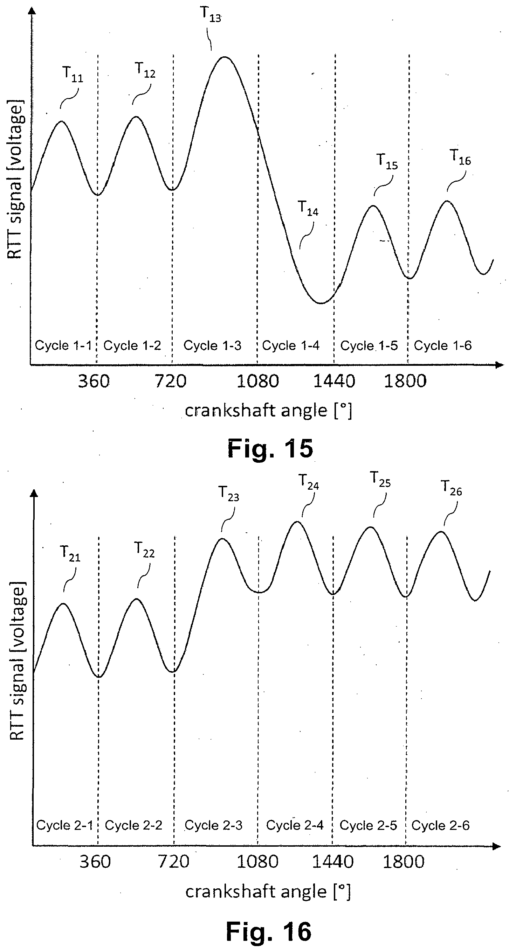

Figs. 15 and 16 show temperature measurement results obtained by the control device, wherein Fig. 15 shows an illustrative case in which no no-spark combustion has occurred in the combustion chamber in a change determining cycle. In the abscissa (x-axis), the crankshaft angle is indicated in degree. The temperature measurement was performed with the temperature sensor 20 of a two-stroke combustion engine having one cylinder. The measurement for one cycle of a combustion chamber corresponds to 360° on the x-axis. In the ordinate (y-axis), the exhaust gas temperature measured by the temperature sensor 20 is indicated. It is noted that the measurements are obtained from a combustion engine 1 which has already reached a stable working temperature. It is further noted that there may a certain shift of the temperature signal relative to the measured rotational angle due to the arrangement of the temperature sensor 20 with respect to the combustion chamber 4, i.e. due to the delay in timing until the exhaust gas from the combustion chamber 4 reaches the temperature sensor 20. The illustrative diagrams of Figs. 15 and 16 are to be understood in such a way that the temperature values indicated in a respective cycle are the values for the measured exhaust gas temperature of that respective cycle.

During one cycle of the combustion chamber 4, the exhaust gas temperature measured by the temperature sensor 20 at the exhaust port 18 starts at a lower temperature within the cycle, then the hot exhaust gas from the combustion chamber 4 starts to pass by the temperature sensor 20 so that the temperature at the temperature sensor 20 continuously rises up to a maximum temperature until no more exhaust gas leaves the combustion chamber 4 approximately in the middle of the cycle and then falls back to a lower temperature while substantially no exhaust gas passes by the temperature sensor 20 up to the end of the cycle.

Cycle 1-1 and cycle 1-2 correspond to normal operating cycles, cycle 1-3 corresponds to an activation cycle and cycle 1-4 corresponds to a change determining cycle. Cycle 1-5 and cycle 1-6 again represent normal operating cycles. The control device 24 can be configured to obtain temperature measurements at a plurality of points in time during one cycle, or at a single point in time during one cycle. For reliably detecting a change in the exhaust gas temperature between two cycles, it is desirable to detect the mean temperature within said cycles, respectively, preferably the mean temperature within a predetermined crankshaft angle section. Alternatively, the control device 24 can be configured to obtain a single temperature measurement at a crankshaft angle at which the maximum temperature is expected. Preferably, the control device 24 is configured to obtain a plurality of temperature measurements, e.g. 3 to 10 temperature measurements, within a section or range of the crankshaft angle shortly after the outlet port is open, e.g. 90° to 180°, in which the maximum exhaust gas temperature is expected, and then use the maximum value or mean value thereof. The control device 24 can also be configured to filter out runaway values of the temperature measurements before determining the maximum value or mean value of the temperature measurements.

Since cycle 1-1 and cycle 1-2 are normal operating cycles, the corresponding temperature signals T₁₁ and T₁₂ obtained by the first input of the control device 24 are substantially the same. Since cycle 1-3 is an activation cycle in which the spark timing is delayed, the measured exhaust gas temperature T₁₃ of said activation cycle is higher than T₁₁ and T₁₂ of the preceding normal operating cycles. Cycle 1-4 is a change determining cycle in which the generation of a spark by the spark plug 2 is suppressed. As indicated above, the diagram of Fig. 15 illustrates a case where no no-spark combustion occurs in the change determining cycle. Accordingly, the measured exhaust gas temperature T₁₄ of cycle 1-4 is lower than the temperature T₁₃ of the activation cycle and temperatures T₁₁ and T₁₂ of the preceding normal operating cycles. The control device 24 compares the temperature T₁₄ of the change determining cycle with the temperature T₁₃ of the activation cycle, and since the difference exceeds a certain predetermined threshold, determines that a change, i.e. no no-spark combustion, has occurred. Based on this determination, the control device 24 determines the first output, which means that the air-fuel ratio is adjusted to the lean side according to the present embodiment. It is noted that the control device 24 can also compare the temperature T₁₄ of the change determining cycle with the temperature T₁₂ of the preceding normal operating cycle 1-2 in order to determine whether a change has occurred.

Fig. 16 shows an illustrative case in which a no-spark combustion has occurred in the combustion chamber in a change determining cycle. The temperature measurement results are obtained under similar measurement conditions as described in Fig. 15. Similar to the case in Fig. 15, cycle 2-1 and cycle 2-2 correspond to normal operating cycles, cycle 2-3 corresponds to an activation cycle and cycle 2-4 corresponds to a change determining cycle. Cycle 2-5 and cycle 2-6 again represent normal operating cycles. Since cycle 2-1 and cycle 2-2 are normal operating cycles, the corresponding temperature signals T₂₁ and T₂₂ obtained by the first input of the control device 24 are substantially the same. Since cycle 2-3 is an activation cycle in which the spark timing is delayed, the measured exhaust gas temperature T₂₃ of said activation cycle is higher than T₂₁ and T₂₂ of the preceding normal operating cycles. Cycle 2-4 is a change determining cycle in which the generation of a spark by the spark plug 2 is suppressed. As in the case illustrated in Fig. 16 a no-spark combustion occurs in the change determining cycle, the measured exhaust gas temperature T₂₄ of cycle 2-4 is substantially equal to or slightly higher than the temperature T₂₃ of the activation cycle and higher than temperatures T₂₁ and T₂₂ of the preceding normal operating cycles. The control device 24 compares the temperature T₂₄ of the change determining cycle with the temperature T₁₃ of the activation cycle, and since the difference does not exceed a certain predetermined threshold, determines that no change, i.e. a no-spark combustion, has occurred. Based on this determination, the control device 24 determines the first output, which means that the air-fuel ratio is adjusted to the rich side according to the present embodiment. It is noted that the control device 24 can also compare the temperature T₂₄ of the change determining cycle with the temperature T₂₂ of the preceding normal operating cycle 1-2 in order to determine whether a change has occurred, wherein the control device determines that no change, i.e. a no-spark combustion, has occurred when T₂₄ of the change determining cycle 2-4 is higher than T₂₂ of the preceding normal operating cycle 1-2.

In Figs. 15 and 16, it is shown that the temperatures T₁₅, T₁₆ (T₂₅, T₂₆) of the two normal operating cycles 1-5 and 1-6 (2-5 and 2-6) following the change determining cycle 1-4 (2-4) are similar to the temperature T₁₄ (T₂₄) of said change determining cycle. This is merely to indicate that the combustion engine 1 may have a configuration and/or the temperature sensor 20 may have a certain thermal inertness such that it may take a few cycles time until the temperature measurements obtainable by the control device 24 gradually reaches the initial temperature T₁₁, T₁₂ (T₂₁, T₂₂) of the normal operating cycles 1-1 and 1-2 (2-1 and 2-2). However, depending on the configuration of the combustion engine 1 and/or the temperature sensor 20, the temperature in the normal operating cycle 1-5 (2-5) directly following the change determining cycle 1-4 (2-4) may already substantially reach the level of the preceding normal operating cycles 1-1 and 1-2 (2-1 and 2-2).

### List of Reference Numerals

- 1: combustion engine
- 2: spark plug
- 4: combustion chamber
- 6: cylinder
- 8: piston
- 10: crank shaft
- 12: air intake
- 14: fuel supply means
- 16: fuel tank
- 17: intake port
- 18: exhaust port
- 19: intake valve
- 20: temperature sensor
- 21: exhaust valve
- 22: rotation sensor
- 24: control device
- 26: NSC-border
- 28: NSC region
- 30: no NSC region
- 32: stable control area
- 34: infrared light emitting element
- 36: holder
- 38: bushing
- 40: tube
- 42: mounting flange
- 44: wall
- 46: pinhole
- 48: first chamber
- 50: second chamber
- 52: optical sensor
- 54: ring
- 56: base
- 58: pins
- 60: electrical connectors
- 62: conductors
- 64: connecting cord
- 66: end cap
- 68: optical path
- 70: microcontroller
- 72: high voltage supply
- 74: low voltage supply
- 76: external electrical power source
- 78: capacitor unit
- 80: switch
- 82: first output terminal
- 84: thyristor
- 86: ignition coil
- 88: second output terminal
- 90: sensor amplifier
- 92: first input terminal
- 94: second input terminal
- 96: signal preparation
- 98: NPN bipolar transistor
- 100: PNP bipolar transistor
- 102: signal out terminal
- 104: grounded capacitor
- 106: resistor
- 108: power supply terminal
- 110: resistor
- T_{amb1}: isothermal line of low ambient temperature
- T_{amb2}: isothermal line of medium ambient temperature
- T_{amb3}: isothermal line of high ambient temperature
- T_{cyl_max}: maximum permissible cylinder temperature
- I₁: distance between infrared light emitting element and pinhole
- I₂: distance between pinhole and optical sensor
- dₚₕ: diameter of pinhole
- T₁₁ - T₁₆: measured temperatures of cycle 1-1 to cycle 1-6
- T₂₁ - T₂₆: measured temperatures of cycle 2-1 to cycle 2-6

## Claims

1. A control device (24) for a combustion engine (1) of a working tool, comprising:
a first input for information of a combustion of one cycle of a combustion chamber (4) of the engine (1), and
a first output for controlling a component (14) of the engine (1),
wherein the control device (24) is configured to determine the first output based on the first input of one cycle of the combustion chamber (4) and the first input of a preceding cycle of the combustion chamber (4).

2. The control device (24) of claim 1, wherein the information provided to the first input is information regarding the temperature and/or pressure of an exhaust gas of the respective cycle of the combustion chamber (4).

3. The control device (24) of claim 1, wherein the information provided to the first input is information regarding the ionization of an air-fuel mixture in the combustion chamber (4) of the combustion engine (1) of the respective cycle of the combustion chamber (4).

4. The control device (24) of claim 1, wherein the information provided to the first input is information regarding temperature and/or vibrations/accelerations in the proximity of the combustion chamber (4) of the combustion engine (1) of the respective cycle of the combustion chamber (4).

5. The control device (24) of any one of the preceding claims, wherein the control device (24) is configured to store a first first quantitative value of the first input of one cycle of the combustion chamber (4) and to compare the first first quantitative value with a second first quantitative value of the first input of a following cycle of the combustion chamber (4).

6. The control device of claim 5, wherein the control device (24) is configured to determine a change of the first quantitative value, if the difference of the first first quantitative value and the second first quantitative value exceeds a predetermined threshold value,
and/or wherein the control device (24) is configured to determine no change of the first quantitative value, if the difference of the first first quantitative value and the second first quantitative value does not exceed a predetermined threshold value.

7. The control device (24) of claim 6,
wherein a component (14) of the combustion engine (1) controlled by the first output is configured to be adjusted for the following cycles of the combustion chamber (4), and
wherein the adjustment is performed differently depending on whether the control device (24) has determined a change of the first first qualitative value or not.

8. The control device (24) of claims 5 to 7, wherein the first first quantitative value and the second first quantitative value of the first input are configured to be respectively measured in a same predetermined crankshaft angle section of a cycle of the combustion chamber (4).

9. The control device (24) of claim 8, wherein the first first quantitative value and the second first quantitative value of the first input are configured to be respectively derived from a plurality of measurements within the predetermined crankshaft angle section, particularly as a mean value of said plurality of measurements.

10. The control device (24) of claim 8 or 9, wherein said predetermined crankshaft angle section corresponds to a crankshaft angle section in which no spark is generated in the combustion engine (1).

11. The control device (24) of any one of the preceding claims, wherein the first output controls an air-fuel ratio of an air-fuel mixture of the engine (1).

12. The control device (24) of any one of the preceding claims, further comprising a second output for controlling sparking actions of a spark plug (2).

13. The control device (24) of claim 12, further configured such that
a first second output signal is provided at the second output for one cycle of the combustion chamber (4);
a second second output signal different from the first second output signal is provided at the second output for a first following cycle of the combustion chamber (4); and
a third second output signal different from the second second output signal is provided at the second output for a second following cycle of the combustion chamber (4).

14. The control device (24) of claim 13, wherein
the first second output signal is configured to generate a spark at a first crankshaft angle during a cycle of the combustion chamber (4);
the second second output signal is configured to generate a spark at a second crankshaft angle during a cycle of the combustion chamber (4) different to the first crankshaft angle; and
the third second output signal is configured to suppress generation of a spark.

15. The control device (24) of any one of the preceding claims, further comprising a second input for information regarding a rotation of a crankshaft of the engine (1).

16. A method for controlling a combustion engine (1), comprising:
determining a first output based on a first input for information of a combustion of one cycle of a combustion chamber (4) of the engine (1) and a first input for information of a combustion of a preceding cycle of a combustion chamber (4) of the engine (1); and
controlling a component (14) of the engine by the first output.

17. A computer program product comprising computer-readable instructions, which, when loaded and executed on a computer system, cause the computer system to perform operations according to claim 15.
